# EUROPEAN PATENT APPLICATION

(11) **EP 4 067 643 A1**
(43) Date of publication of application: **05.10.2022**
(21) Application number: 21215784.6
(22) Date of filing: 17.12.2021
(51) Int. Cl.: F03D 3/04, F03D 1/04

(54) **WIND POWER GENERATION SYSTEM**

(30) Priority: 17.12.2020 CH 16072020
(71) Applicant: Tolazzi, Corrado, 6645 Brione sopra Minusio (CH)
(72) Inventor: Tolazzi, Corrado, 6645 Brione sopra Minusio (CH)
(74) Representative: Pasquino, Fabio

(57) **Abstract**

The present invention relates to a wind power generation system of electric energy (1) comprising a conveying portion (20) of an air flow arranged between an inlet portion (10) of said air flow and an outlet portion (30) of said air flow and a pair of ducts (120, 220) which are separate and arranged into said conveying portion (20), wherein each of said pair of ducts (120, 220) is provided with inlet openings (121, 221) and with outlet openings (123, 223), said inlet openings (121, 221) being arranged at said inlet portion (10) and said outlet openings (123, 223) being arranged at said outlet portion (30), and wherein the area of said inlet openings (121, 221) is greater than the area of said outlet openings (123, 223).

## Description

### Field of the invention

The present invention relates to a wind power generation system of electric energy, that is, a system capable of allowing the intake and conveyance of air through a fixed path. In particular, the present invention relates to a wind power generation system of electric energy able to be used in the generation of electricity on moving vehicles.

### Backgroung art

The exponential growth of the fleet of vehicles in circulation in recent decades has markedly contributed to the production of pollution, with particular regard to air pollution due to the introduction of combustion products, or worse partly-combusted products, of the engines with which the vehicles are equipped.

The increase in pollution has consequently required a marked commitment of the legislators in the regulation of the production of pollutants by vehicles, causing them to drastically reduce the limit thresholds in particular in recent years.

Among the solutions identified by vehicle manufacturers to ensure compliance with the aforementioned limit thresholds, based on the mean of the vehicle fleet, the greatest propensity was to develop alternative propulsion systems to the traditional internal combustion engine. Currently, the propulsion system that seems to best satisfy the required requirements, both in terms of atmospheric emissions and in terms of efficiency and performance of the vehicles, is the electric one. The latter solution is becoming the preferred choice for users who see a "green" perspective on their moving needs.

With the term electric vehicle is intended a means of transport that uses an electric propulsion system for its operation which is generally powered by rechargeable batteries. In particular, the electric car is a car with an electric motor that uses the chemical energy stored in one or more rechargeable batteries and made available by them to the engine in the form of electricity as a primary energy source.

Electric vehicles are overall more energy efficient than internal combustion engines. On the other hand, they have a limited autonomy between recharges, a long time for recharging and a reduced life cycle of the batteries.

To compensate, at least in part, for the above drawbacks, technological research has developed new types of rechargeable batteries and new technologies have increased their autonomy and useful life, while reducing their recharging time. Despite this technological development, the use of a large number of batteries, such as to ensure adequate autonomy, causes a high increase in the weight of the vehicle itself, which also results in a reduction in the autonomy and performance.

It would therefore be desirable to have a power generation system of electric energy capable of minimizing the drawbacks described above. In particular, it would be desirable to have a wind power generation system of electric energy able to guarantee a continuous recharge of the arranged accumulators, while limiting the generation of polluting substances.

### Summary of the Invention

An object of the present invention is to provide a power generation system of electric energy capable of minimizing the aforesaid problems.

In particular, purpose of the present invention is to provide a wind power generation system of electric energy able to allow an autonomous management and production of electric energy, by considerably reducing costs and times of production and setting up of the system itself.

The aforesaid objects are achieved by a wind power generation system of electric energy according to the attached claims.

The wind power generation system of electric energy comprises a conveying portion of an air flow and a turbine for the generation of electric energy by means of the air flow, wherein the conveying portion is arranged between an inlet portion of the air flow and an outlet portion of the air flow and wherein the blades of the turbine are arranged at the outlet portion to get the air flow leaving the conveying portion, the wind power generation system of electric energy is characterized in that it comprises a pair of ducts which are separate and arranged into the conveying portion,
wherein each of the pair of ducts is provided with inlet openings and with outlet openings, the inlet openings being arranged at the inlet portion and the outlet openings being arranged at the outlet portion, and
wherein the area of the inlet openings is greater than the area of the outlet openings.

The structure of the system according to the present invention allows, therefore, to have a balanced air flow at the outlet portion with respect to the pair of ducts, regardless of the volume and turbulence of the incoming air flow.

Preferably, the inlet openings have asymmetrical conformation and are arranged side by side and opposite to each other.

More preferably, the inlet openings have the same dimension and are arranged such that to be complementary.

In this way, the air flow conveys towards the inlet openings in a balanced way.

Preferably, the outlet openings have asymmetrical conformation and are arranged side by side and opposite to each other.

More preferably, the outlet openings have the same dimension and are arranged such that to be complementary.

In this way, the air flow from the outlet openings flows out in a balanced way.

Preferably, the wind power generation system of electric energy comprises adjusting means of the air flow at the inlet portion able to keep constant the air flow at the blades of the turbine.

This allows you to define the volume of the incoming air flow according to the required needs.

Preferably, the adjusting means comprise at least a movable bulkhead arranged at the inlet portion.

The use of the bulkhead allows to easily adjust the volume of the required air flow.

Preferably, the adjusting means comprise a moving device of the movable bulkhead, wherein the moving device is of the telescopic hydraulic type or of the telescopic electric type or of the preloaded elastic element type.

In this way, the regulation of the air flow in the inlet portion allows the turbine blades to be maintained with an air flow such as to optimize their rotation and, consequently, the generation of electric energy.

Preferably, the rotation shaft of the turbine is arranged in the conveying portion between the ducts.

The arrangement of the turbine shaft in the conveying portion allows to significantly reduce the volume required for the system, as well as to keep the blades directly in contact with the air flow of the outlet openings.

Preferably, the ducts extend in a spiral way along the conveying portion.

The arrangement of the ducts in a spiral way allows, therefore, to modify the arrangement of the outlet openings with respect to the position of the inlet openings, thereby stabilizing any swirling air flow.

### Description of the figures

These and further features and advantages of the present invention will become apparent from the disclosure of the preferred embodiment, illustrated by way of non-limiting example in the appended drawings, wherein:
- Figure 1 is a schematic sectional side view of the preferred embodiment of the wind power generation system, in accordance with the present invention;
- Figure 2 is a schematic sectional side view of the detail of the conveying portion of the wind power generation system of Figure 1;
- Figure 3 is a schematic front view of the conveying portion of Figure 2;
- Figure 4A is a schematic sectional side view of the detail of the inlet portion of the wind power generation system of Figure 1, when the adjusting means completely close the air inlet;
- Figure 4B is a schematic sectional side view of the detail of the inlet portion of the wind power generation system of Figure 1, when the adjustment means fully open the air inlet;
- Figure 5 is a schematic sectional top view of the detail of the outlet portion of the wind power generation system of Figure 1;
- Figure 6 is a rear perspective view of a second embodiment of the wind power generation system without the frame, in accordance with the present invention;
- Figure 7 is a schematic front perspective view of the wind power generation system of Figure 2;
- Figure 8 is a partial schematic front perspective view of the frame provided with the turbine for the wind power generation system of Figure 6;
- Figure 9 is a partial schematic rear perspective view of the frame provided with the turbine for the wind power generation system of Figure 6;
- Figure 10 is a partial schematic perspective view of the frame for the wind power generation system of Figure 6;
- Figure 11 is a front perspective view of the frame for the wind power generation system of Figure 6.

### Detailed description of the invention

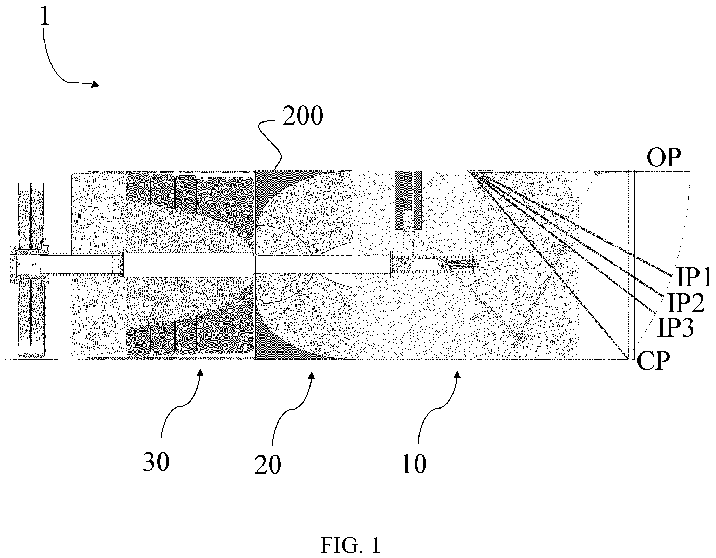

With reference to Figures 1-5, a preferred embodiment of the wind power generation system of electric energy 1, according to the present invention, is illustrated.

The wind power generation system of electric energy 1 comprises, in its minimal essential features, a conveying portion 20 of an air flow (not illustrated) and a turbine 100 for the generation of electric energy by means of the air flow.

Wind energy is the energy of the wind, that is, the kinetic energy of a moving mass of air. It is an alternative energy source to that produced by the combustion of fossil fuels, renewable and in support of the green, clean economy, which does not produce greenhouse gas emissions during operation, requires a not excessively large surface, and it is possible to exploit it thanks for example to the use of turbines suitable for the production of electric energy.

As shown in Figure 1, a frame 200 contains both the aforementioned conveying portion 20 and the turbine 100 in such a way as to allow a more practical handling and installation of the system 1. The same frame 200 also defines the inlet portion 10 of the air flow and the outlet portion 30 of the air flow, the latter able to accommodate the aforementioned turbine 100.

In particular, purpose of the wind power generation system of electric energy 1 according to the present invention is to generate electric energy by means of the air flow originated during the movement of a vehicle, therefore the frame 200 must allow an easy installation in a shortened timeframe at a portion of the vehicle (not shown) more exposed to the air flow during the movement, for example the roof or hood of the same.

In this regard, the frame 200 illustrated in the present embodiment has a parallelepiped conformation, preferably a rectangular parallelepiped, but according to further embodiments (not illustrated) it could also have different conformations or alternatively the wind power generation system of electric energy could be devoid of it. The dimensions of the frame 200 include a length and a width each of which equal to 100 cm and a height of 30 cm. The measures of the aforesaid dimensions can vary according to the technical design needs, without modifying the inventive concept of the present invention.

The conveying portion 20 is arranged between an inlet portion 10 of the air flow and an outlet portion 30 of the air flow, as illustrated in the schematic view of Figure 1. In the present embodiment, the conveying portion 20 is arranged at the barycentric center of the frame 200, this position being identified at the median position of both the length and the width, but different positions can be used.

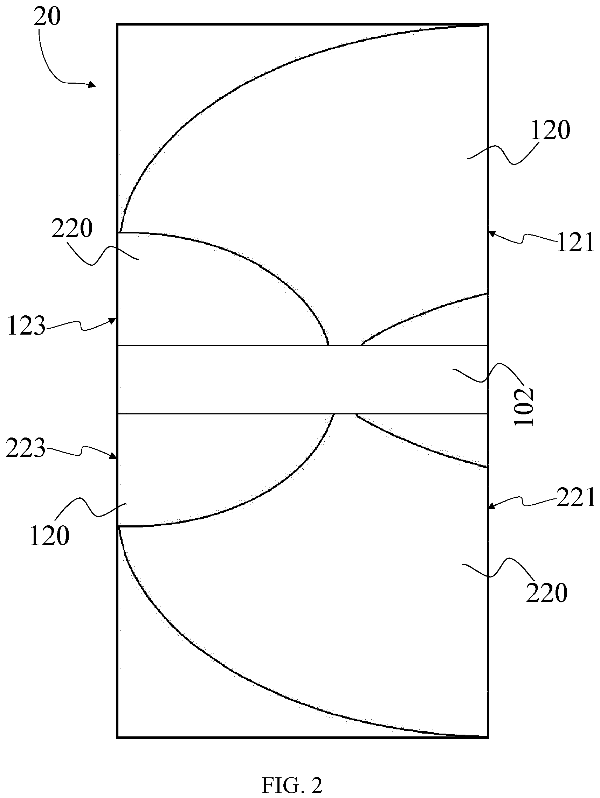

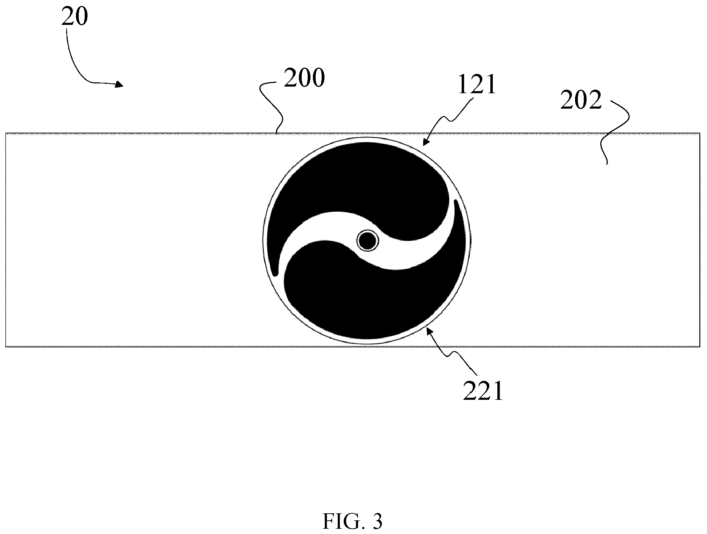

Figures 2 and 3 show in detail the aforementioned conveying portion 20 provided with a pair of ducts 120, 220, separate to each other, as main elements of the same conveying portion 20.

As shown in Figure 2, in the preferred embodiment the ducts 120 220 extend in a spiral way along the conveying portion 20. This spiral way extension allows to reduce the volume occupied by the aforementioned ducts 120, 220, while maintaining a high extension. The arrangement of the ducts in a spiral way makes it also possible to modify the arrangement of the outlet openings 123, 223 with respect to the position of the inlet openings 121, 221, thereby stabilizing any swirling air flow.

Each of the ducts 120, 220 is, in fact, provided with an inlet opening 121, 221 and an outlet opening 123, 223, which are also distinct. In particular, the inlet openings 121, 221 are arranged in the conveying portion 20 at the inlet portion 10 while the outlet openings 123, 223 are arranged in the conveying portion 20 at the outlet portion 30. The main characteristic of the aforementioned inlet 121, 221 and outlet 123, 223 openings is related to the width of the same, or of the relative opening, measured as the dimension of the area of the plane corresponding to the section that defines them, where the area of the openings 121, 221 inlet is greater than the area of the outlet openings 123, 223.

In this regard, the blades 101 of the turbine 100, the structure of which will be illustrated in greater detail below, are arranged at the outlet portion 30 to receive the air flow exiting from the conveying portion 20, or from the aforementioned outlet openings 123, 223.

The structure of the system 1 according to the present invention allows therefore to have a balanced air flow at the outlet portion 30 with respect to the pair of ducts 120 220, regardless of the volume and turbulence of the incoming air flow.

Figure 3 shows a front view of the conveying portion 20 at the inlet openings 121, 221. In particular, the frame 200 has a wall 202 arranged inside it and perpendicular to the extension of the same frame 200 and on which the aforementioned inlet openings 121, 221 are made, so that the air flow conveys towards the same. The inlet openings 121, 221 have an asymmetrical shape and are arranged side by side and opposite each other. In particular, the inlet openings 121, 221 have the same size and are arranged in such a way as to be complementary, so that the flow of air conveys towards the inlet openings 121, 221 in a balanced way. According to the present embodiment, the shape of the aforesaid inlet openings 121, 221 can be defined as "*drop shaped*", in particular, since these have an asymmetrical conformation they can be defined as "*asymmetrical drop shaped*". The shape is well shown in Figure 3, to which reference is made for a geometric definition that cannot be described with the same precision and completeness as shown. According to alternative embodiments, not shown, it is possible to provide inlet openings with a different shape but still able to ensure that the air flow conveys towards them in a balanced way.

Likewise, the outlet openings 123, 223 have an asymmetrical shape and are arranged side by side and opposite each other. In particular, the outlet openings 123, 223 have the same size and are arranged in such a way as to be complementary, so that the air flow flows out of the outlet openings 123, 223 in a balanced way. The shape of the aforesaid outlet openings 123, 223 according to the present embodiment can be defined as "*drop shaped*", in particular, since these have an asymmetrical shape they can be defined as "*asymmetrical drop shaped*". The shape is well shown in Figure 3, to which reference is made for a geometric definition that cannot be described with the same precision completeness with respect to what is shown. According to alternative embodiments, not illustrated, it is possible to provide outlet openings with a different shape but still capable of ensuring that the air flow flows out of them in a balanced way.

Taking into consideration the extension in a spiral way of the ducts 120, 220, as described above, it is possible to define a different orientation between the inlet openings 121, 221 and the outlet openings 123, 223. In particular, the latter are, although arranged on a parallel plane with respect to the former, rotated on the same plane by a predefined angle and such as to modify the mutual positioning of the outlet openings 123, 223 with respect to the inlet openings 121, 221. Although preferably, the aforementioned changes in the positioning between the inlet openings and the outlet openings may not be done according to different embodiments.

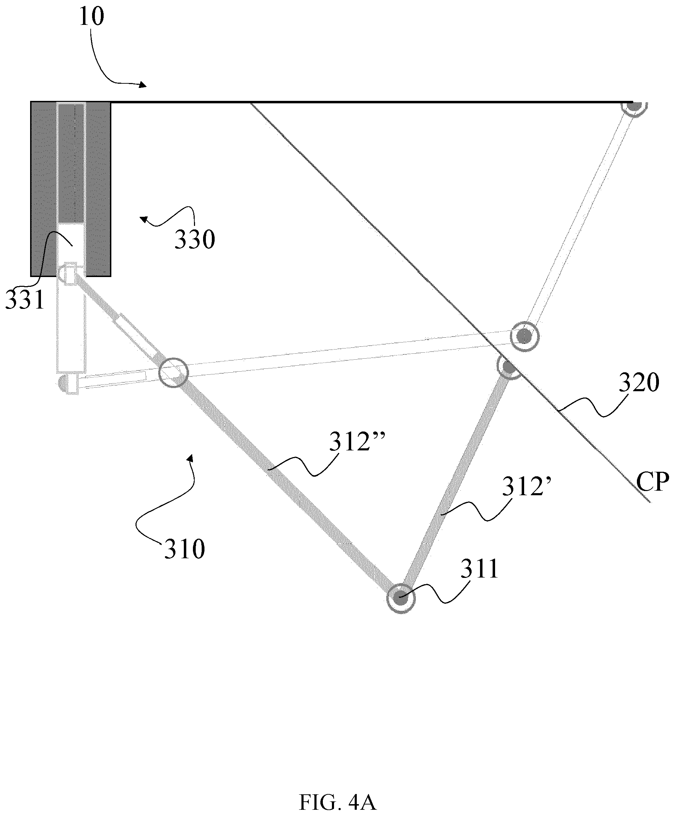

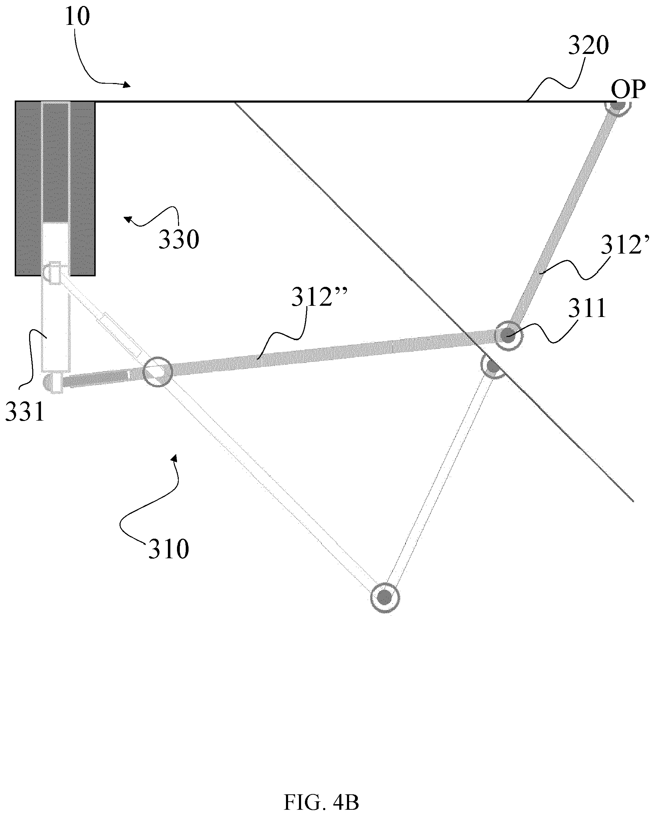

The inlet portion 10 is illustrated in greater detail in Figures 4A and 4B. Said inlet portion 10 comprises adjusting means of the air flow, also capable of helping to keep the air flow constant to the blades 101 of the turbine 100, which in the present embodiment have a moving device 310, preferably of the hydraulic telescopic or electric telescopic type.

In particular, the aforesaid adjusting means of the air flow are able to keep constant the air flow entering the inlet portion 10, thus defining a constant air flow also for the blades 101 of the turbine 100. This allows to define the volume of the incoming air flow according to the required needs.

In the preferred embodiment, the adjustment means comprise at least one movable bulkhead 320 arranged at the inlet portion 10. The movable bulkhead 320 is rotatable with respect to a fixed position of the frame 200, in particular with respect to a movable fulcrum pin 311 which divides the rod 312', 312" of the aforementioned moving device 310 into two portions and is able to allow the rotation of the same movable bulkhead 320 with respect to the frame 200. In particular, the movable bulkhead 320 can be moved from a position of complete closure CP, as illustrated in Figure 4A, in which in the inlet portion 10 there is no incoming air flow, to a fully open position OP, as illustrated in Figure 4B, in which in the inlet portion 10 the incoming air flow is maximum. Intermediate positions IP1, IP2, IP3 are illustrated in Figure 1, where the percentage of the incoming air flow varies according to the inclination of the same bulkhead 320, allowing to easily adjust the volume of the air flow required, for example by increasing or reducing the opening for the access of the air flow in the inlet portion 10. The plurality of possible configurations is not exhaustive. Furthermore, in the fully closed position CP, where the incoming air flow from the conveying portion 20 is not allowed, the system according to the present invention can be provided with openings, or vents, suitable for the deviation and outflow of the air flow outside. from the entrance portion 10. Such openings, or vents, are preferably made on the upper wall of the frame 200 in such a way that in the fully open position OP of the mobile bulkhead 320 they are completely closed and, on the contrary, in the fully closed position CP of the mobile bulkhead 320 they are fully open. In this way, the air flow is diverted to the vents, interrupting the air flow to the turbine 100 without changing the travel of the vehicle.

The adjustment of the position of the movable bulkhead 320 is defined by a moving device 310 which, as described above, in the present embodiment is defined by a device of the electric telescopic type. As illustrated in Figures 4A and 4B, this moving device 310 is provided with a plurality of rods 312', 312" which are reciprocally hinged to be able to move each other with respect to the frame 200. In particular, the rod 312' has one end hinged to the movable bulkhead 320 while the rod 312" has one end hinged to an adjustment component 330 capable of ensuring its movement, the remaining ends being hinged to each other. The adjustment component 330 has a movable piston 331, preferably electrically operated, capable of directly moving the portion 312' of the rod.

Therefore, the regulation of the air flow in the inlet portion 10 is carried out by the actuation of the adjustment component 330 which allows, at the same time, the translation of the rod 312" and, in consideration of the reciprocal couplings by means of hinges, the movement in rotation of the rod 312'. According to the movement of the aforementioned adjustment component 330, the inclination of the mobile bulkhead 320 will therefore be modified, placing the latter in one of the positions of complete closure CP, complete opening OP and intermediate IP1, IP2, IP3, as previously described.

In this way, the regulation of the air flow in the inlet portion 10 allows to maintain an air flow such as to optimize the rotation of the blades 101 of the turbine 100 and, consequently, the generation of electric energy.

According to alternative embodiments, not shown, the adjustment means can be made in a different way, for example comprising a moving device of the movable bulkhead of the elastic element type with a preload able to autonomously modify the position of the movable bulkhead according to the load of the air flow applied to it.

Similarly, it is possible to provide computerized devices for adjusting the position of the movable bulkhead, or use different actuations to manage the air flow entering the inlet portion.

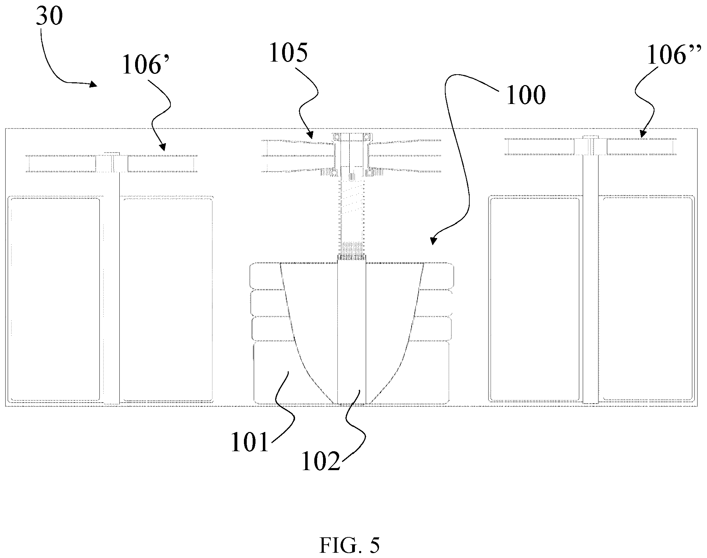

Finally, Figure 5 shows a schematic sectional side view of the detail of the outlet portion 30 of the wind power generation system 1 according to the present invention. According to what has been described above, the turbine 100 is arranged in the aforementioned outlet portion 30, the blades 101 of which are arranged at the end which is adjacent to the outlet openings 123, 223.

In the preferred embodiment, the rotation shaft 102 of the turbine 100 is arranged in the conveying portion 20 between the ducts 120, 220.

The arrangement of the shaft 102 of the turbine 100 in the conveying portion 20 allows to considerably reduce the volume necessary for the system 1, as well as to keep the blades 101 directly in contact with the air flow of the outlet openings 123, 223. The extension in a spiral way of the ducts 120, 220 ease the arrangement of the shaft 102 between them, defining a suitable cavity for positioning that allows to reduce the volume occupied by the system 1.

Furthermore, in the preferred embodiment and according to what is illustrated in Figure 1, the shaft 102 is also part of the moving device 310 defining the support for the adjustment component 330. Similarly, the same shaft 102 can act as an adjustment component 330 by modifying the positioning of the rods 312', 312" as a function of the load applied to the blades 101 of the turbine 100 and therefore its translation along its axis of rotation. In this way, the regulation of the incoming air flow would result from the feedback of the same air flow acting on the blades 101 of the turbine 100.

Finally, as illustrated in Figure 5, downstream of the blades 101 and connected to the same shaft 102 there is an electric energy generation system, that is a motion reduction device 105 able to generate and move an electric energy generation device. In the embodiment described therein, the aforementioned motion reduction device 105 is spliced onto the same shaft 102 in such a way as to allow only rotation integral with the shaft 102. In turn, the motion reduction device 105 is operatively connected with suitable power transformers 106', 106", which in turn are moved for the generation of electric energy. Further, it is possible to provide an electric energy storage device, for example defined by one or more battery packs, operatively connected to the aforementioned power transformers and able to store the generated electric energy or to use the same for the vehicle components.

The wind power generation system of electric energy 1 is, therefore, suitable for the generation of electric energy through the use of the air flow generated while a vehicle is traveling. During its travel, in fact, the vehicle encounters a mass of air that generates resistance and which, in the present invention, is channeled, at least in part, into the system 1.

The air flow generated entering the inlet portion 10 is therefore able to move the electric turbine 1, the operation of which is guaranteed by the same flow of air outgoing from the conveying portion 20 and directed onto the blades 101 of the same. turbine 100. The wall 202 of the frame 200 forces the air flow entering the conveying portion 10 to flow towards the openings 121, 221.

The rotation of the turbine 100 is therefore able to directly generate electric energy or to move one or more mechanical devices, such as the reduction device 105, in order to use the mechanical energy generated for the generation of electric energy by means of the transformers 106', 106".

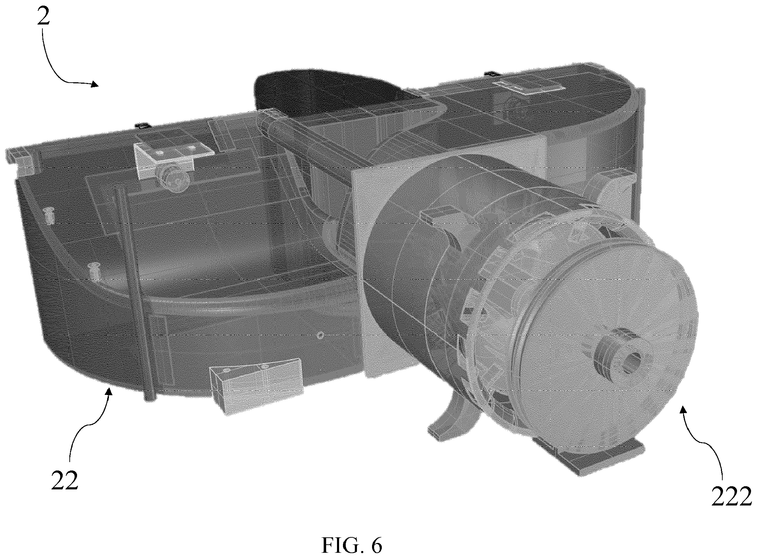

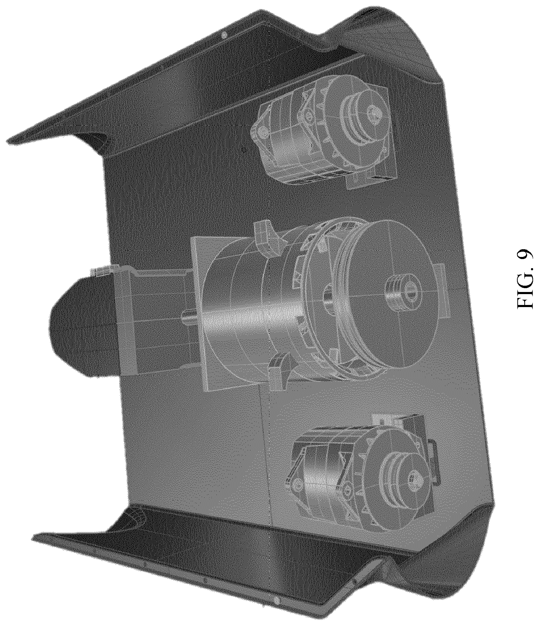

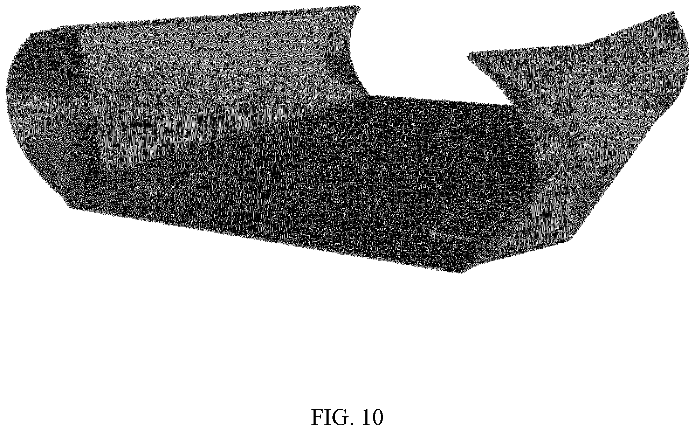

With reference to Figures 6-11, a second embodiment of the wind power generation system 2 is illustrated, in accordance with the present invention. This wind power generation system 2 corresponds, *mutatis mutandis*, to the wind power generation system 1 above described as preferred embodiment and therefore will be described only with respect to the differentiating components.

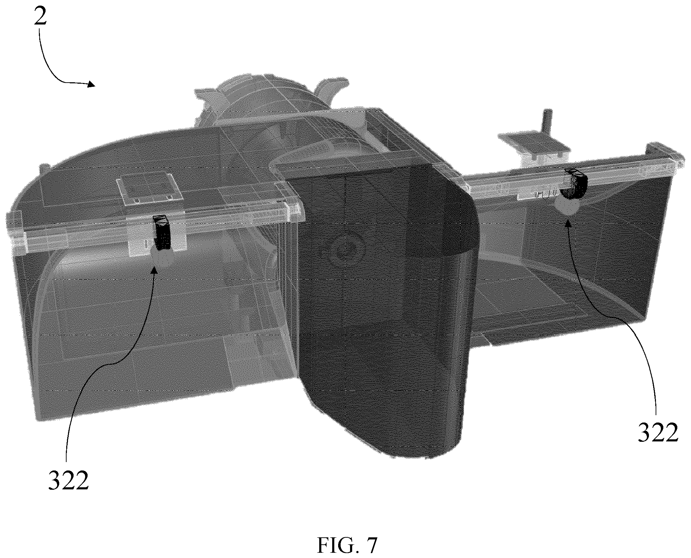

The wind power generation system of electric energy 2 comprises, in its minimum essential characteristics, a convey portion 22 of an air flow and a turbine 222 for generating electric energy by means of the aforementioned air flow, as illustrated in Figures 6 and 7.

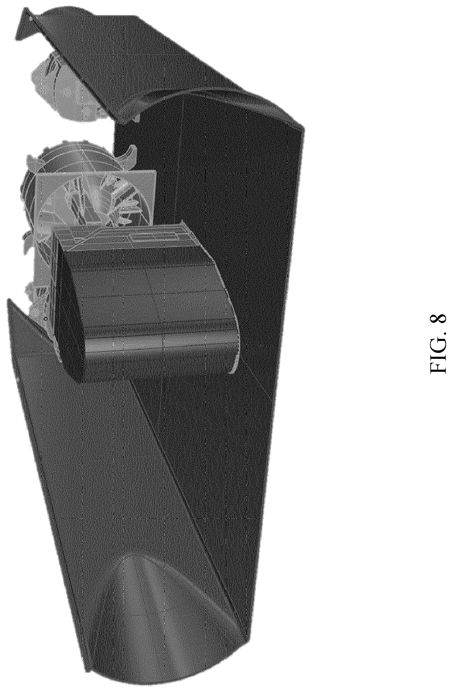

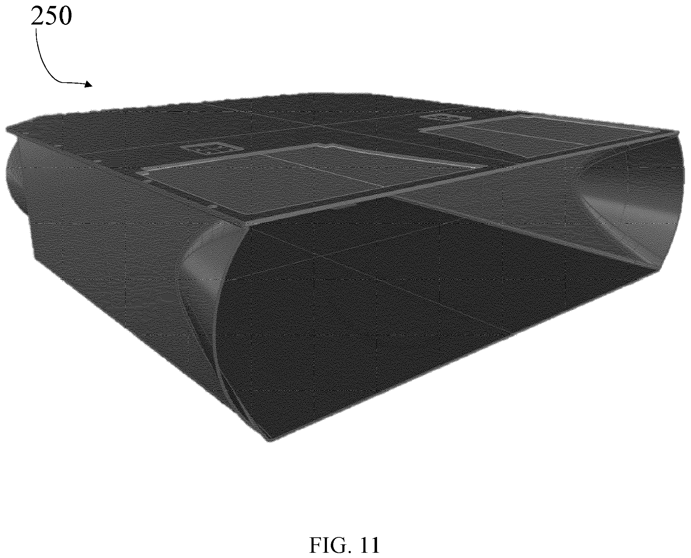

Figures 8-11 illustrate the frame 250 adapted to contain the aforementioned elements, where Figure 11 illustrates the aforesaid frame in its complete form.

Unlike what is illustrated in the first embodiment, the wind power generation system 2 comprises a moving device 322 but without the telescopic drive, in this case reducing the production complexity and related costs. In particular, in the second embodiment illustrated therein there are a pair of ring nuts, each of which is suitable for operating the relative bulkhead to which it is operatively connected.

The present invention therefore allows to obtain a wind power generation system of electric energy such as to allow optimal management of the electric recharge without the need to force the vehicle to stop it for recharging.

In particular, the wind power generation system of electric energy in accordance with the present invention allows to define a wind power generation system of electric energy capable of guaranteeing a production such as to satisfy a part of the electrical needs of an electric traction vehicle.

Finally, the wind power generation system of electric energy in accordance with the present invention allows to define an autonomous system capable of generating a production of electric energy in complete autonomy.

## Claims

1. A wind power generation system of electric energy (1) comprising a conveying portion (20) of an air flow and a turbine (100) for the generation of electric energy by means of said air flow, wherein said conveying portion (20) is arranged between an inlet portion (10) of said air flow and an outlet portion (30) of said air flow and wherein the blades (101) of said turbine (100) are arranged at said outlet portion (30) to get said air flow leaving said conveying portion (20), said wind power generation system of electric energy (1) is **characterized in that** it comprises a pair of ducts (120, 220) which are separate and arranged into said conveying portion (20),
wherein each of said pair of ducts (120, 220) is provided with inlet openings (121, 221) and with outlet openings (123, 223), said inlet openings (121, 221) being arranged at said inlet portion (10) and said outlet openings (123, 223) being arranged at said outlet portion (30), and
wherein the area of said inlet openings (121, 221) is greater than the area of said outlet openings (123, 223).

2. The wind power generation system of electric energy (1) according to claim 1, wherein said inlet openings (121, 221) have asymmetrical conformation and are arranged side by side and opposite to each other.

3. The wind power generation system of electric energy (1) according to claim 2, wherein said inlet openings (121, 221) have the same dimension and are arranged such that to be complementary.

4. The wind power generation system of electric energy (1) according to claim 2 or 3, wherein said outlet openings (123, 223) have asymmetrical conformation and are arranged side by side and opposite to each other.

5. The wind power generation system of electric energy (1) according to claim 4, wherein said outlet openings (123, 223) have the same dimension and are arranged such that to be complementary.

6. The wind power generation system of electric energy (1) according to one of claims 1-5, comprising adjusting means of said air flow at said inlet portion (10) able to keep constant said air flow at said blades (101) of said turbine (100).

7. The wind power generation system of electric energy (1) according to claim 6, wherein said adjusting means comprise at least a movable bulkhead (320) arranged at said inlet portion (10).

8. The wind power generation system of electric energy (1) according to claim 7, wherein said adjusting means comprise a moving device (310) of said movable bulkhead (320), wherein said moving device (310) is of the telescopic hydraulic type or of the telescopic electric type or of the preloaded elastic element type.

9. The wind power generation system of electric energy (1) according to one of claims 1-8, wherein the rotation shaft (102) of the turbine is arranged in the conveying portion (20) between said ducts (120, 220).

10. The wind power generation system of electric energy (1) according to one of claims 1-9, wherein said ducts (120, 220) extend in a spiral way along said conveying portion (20).
